# EUROPEAN PATENT SPECIFICATION

(11) **EP 0 488 105 B1**
(45) Date of publication and mention of the grant of the patent: **31.01.1996**
(21) Application number: 91120054.1
(22) Date of filing: 25.11.1991
(51) Int. Cl.: C01B 31/08, B01D 53/34, F01N 3/08

(54) **Activated carbon, production thereof and its use for adsorption**
Aktivkohle, Verfahren zur Herstellung und ihre Verwendung zur Adsorption
Charbon actif, sa production et son utilisation en adsorption

(30) Priority: 26.11.1990 JP 325036/90; 15.03.1991 US 669917; 20.03.1991 EP 91104332; 24.10.1991 JP 303889/91
(43) Date of publication of application: 03.06.1992
(73) Proprietor: THE SOCIAL WELFARE FOUNDATION HOKKAIDO REHABILY, Sapporo-gun, Hokkaido (JP)
(72) Inventor: Ikenaga, Yoshihiro, c/o The social welfare, Hiroshima-cho, Sapporo-gun, Hokkaido (JP); Kobata, Takeji, c/o The social welfare, Hiroshima-cho, Sapporo-gun, Hokkaido (JP)
(74) Representative: VOSSIUS & PARTNER

(56) References cited:
- WO-A-91/14495
- DE-A- 2 139 678
- DE-A- 2 352 790
- FR-A- 404 200
- GB-A- 1 537 033
- US-A- 3 147 097
- WORLD PATENTS INDEX Week 7621, Derwent Publications Ltd., London, GB; AN 76-39019X & JP-A-51 041 694, 09.04.1976
- WORLD PATENTS INDEX LATEST Week 8845, Derwent Publications Ltd., London, GB; AN 88-321093 & SU-A-1 392 026, 30.04.1988
- INDUSTRIAL & ENGINEERING CHEMISTRY RESEARCH, VOL 26, No 12, 1987, OGASAWARA SADAO & AL.: "PREPARATION OF ACTIVATED CARBON BY THERMAL DECOMPOSITION OF USED AUTOMOTIVE TIRES" PAGES 2552-2556
- PATENT ABSTRACTS OF JAPAN vol. 13, no. 376 (M-862)21 August 1989 & JP-A-01 127 812, 19.05.1989

## Description

The present invention relates to an activated carbon, a process for producing the activated carbon and adsorption using the activated carbon.

Activated carbon is a porous carbonaceous substance having a large specific surface area and large adsorption ability and has a wide range of uses as an adsorbent for various purposes.

Activated carbon can be used for adsorbing gases and vapors, recovering solvents, purifying gases, deodorizing gases, and contacting with liquids so as to treat water, decolor or purify solutions. Further, activated carbon can be used as carriers for catalysts.

Heretofore, activated carbon has been manufactured by treating wood or brown coal with an activating agent, e.g. zinc chloride, phosphoric acid and the like followed by dry distillation, or by activating charcoal with steam. For example, charcoal, coconut husk, coal char and the like are sufficiently carbonized followed by a high temperature treatment by means of steam. Or the activated carbon is activated by soaking in zinc chloride and calcination at a high temperature.

Activated carbon usually has specific surface area of 800 - 1200 m²/g, pore volume of 0.2 - 2 cm³/g and pore size of 1 - 4 nm.

Activated carbon is comprised of mainly carbon and small amounts of hydrogen, oxygen and inorganic components. With respect to the chemical structure, activated carbon is mainly composed of graphite, amorphous and has functional groups such as hydroxy group, quinone group and the like on the surface.

According to the present invention, it is contemplated to produce an activated carbon of excellent adsorbability by using waste tires which have recently caused difficult problems as to disposal, in place of ordinary starting materials such as charcoal, brown coal, coconut husk, coal char and the like. Further it is contemplated to use particular properties of the activated carbon effectively.

Japanese Patent Application Laid-open No. Hei 1 - 127812 discloses that waste tires are burned as a fuel for boilers and the resulting cinder adsorbs perchloroethylene gas to some extent.

Exhaust gas from combustion of heavy oil, such as from heavy oil combustion boilers, contains sulfur oxide (SO₂) and nitrogen oxides (Nox) which cause acidic rain, and therefore SO₂ and Nox should be removed from the exhaust gas. Heretofore, removal of these harmful components has been carried out as shown below.

In coal thermoelectric power plants, coal cinders are mixed with quick lime and gypsum and the resulting mixture is used for adsorbing SO₂ in the exhaust gas.

This mixture material is a product solidified with pitch.

In coal combustion boilers and heavy oil combustion boilers, 99 % of the exhaust gas treatment apparatuses for removing harmful substances, SO₂, Nox and like is carried out by a wet-type means and the adsorbents are quick lime, gypsum and the like. However, these adsorbents are washed, i.e. so-called treatment with water.

Other than the above-mentioned methods, dry type treatments using coal ash, lime and gypsum are available.

The treatments as mentioned above have the following problems. Those apparatuses are large in size, complicated and the mechanism is of a large scale.

Even in case of dry type treatments, conventional apparatuses have separately a desulfurization tower and a denitration tower, or require a step comprising mixing different components, kneading and solidifying the mixture with water and shaping by drying.

In a wet type apparatus, there are provided separately a dust removing tower and an absorbing tower, and the exhaust gas is washed with a water shower and the waste water is subjected to a water treatment. The dry type treatment using coal ash, lime and gypsum also costs as much as the wet type treatment.

Heretofore, an exhaust gas from a light oil combustion apparatus, for example, diesel engine has been treated by various methods. For example, a copper type zeolite catalyst or an activated alumina catalyst is set in an exhaust gas introducing pipe connected with a muffler so as to remove SO₂ and Nox. However, desired results are not obtained.

The present invention has been made in view of the problems of the conventional treating techniques.

### SUMMARY OF THE INVENTION

An object of the present invention is to provide an activated carbon having a large pore size and a large pore volume though the specific surface area is small, and further useful characteristics.

Another object of the present invention is to provide a simple and effective method or apparatus for removing SO₂ and/or Nox from an exhaust gas from heavy oil combustion, in particular, from heavy oil combustion boilers.

A further object of the present invention is to provice a method or apparatus for removing harmful components such as SO₂ and Nox in an exhaust gas from light oil combustion.

According to one aspect of the present invention, there is provided an activated carbon which comprises carbon microcrystals irregularly arranged and difficultly graphitizable carbon which comprises difficultly graphitizable crosslinking lattices in the gaps among carbon microcrystals and has pencil hardness of from B to 6B, pore size of 100 - 400 Å, specific surface area of 150 - 500 m²/g, pore volume of 1.3 - 5.0 ml/g, and, if desired, CEC of 8 - 13.

According to another aspect of the present invention, there is provided a method for removing SO₂ and/or Nox from an exhaust gas formed by the combustion of heavy oil which comprises passing the exhaust gas through the activated carbon as mentioned above.

According to a further aspect of the present invention, there is provided an apparatus for removing SO₂ and/or Nox from an exhaust gas formed by the combustion of heavy oil which comprises a conduit for discharging the exhaust gas to the open air and a screen portion accommodating the activated carbon of the present invention as mentioned above fitted to said conduit across said conduit.

According to still another aspect of the present invention, there is provided a method for producing said activated carbon which comprises burning waste tires containing metal cord at 400 - 900°C in the presence of oxygen and in the presence of CO₂ and water vapor.

According to a still further aspect of the present invention, there is provided an apparatus for treating an exhaust gas from a light oil combustion apparatus which comprises:
a muffler connected with the light oil combustion apparatus, an exhaust pipe containing an exhaust gas introducing and exhausting pipe provided with multiple gas discharging small holes and a plurality of gas escape ports and a filter pipe, and a gas outlet pipe connected with the exhaust pipe, said filter pipe being composed of an inner layer filter pipe and an outer layer filter pipe, an activated carbon as mentioned above packed in the space between the inner layer filter pipe and the outer layer filter pipe, and a blind plate blocking one end of the filter pipe, and the exhaust gas introducing and exhausting pipe being provided in the inner space of the inner layer filter pipe.

According to still another aspect of the present invention, there is provided a method for treating an exhaust gas from a light oil combustion apparatus which comprises adsorbing and removing harmful components in the exhaust gas with said activated carbon produced by burning waste tires or an activated carbon having said particular structure and particular characteristics.

### BRIEF DESCRIPTION OF THE DRAWINGS

FIG. 1 is an oblique view of an embodiment of the apparatus for removing SO₂ and/or Nox by means of the activated carbon of the present invention;
FIG. 2 is a cross sectional view of the apparatus in FIG. 1;
FIG. 3 is an oblique view of a screen frame used in the apparatus in FIG. 1;
FIG. 4 is an enlarged oblique view of a part of the screen frame of FIG. 3;
FIG. 5 and FIG. 6 are diagrammatical cross sectional views of the apparatus of FIG. 1 with a means for controlling feeding of the activated carbon;
FIG. 7 is a diagrammatical cross sectional view of another embodiment of the apparatus of the present invention;
FIG. 8 is an electron microphotograph of the activated carbon of the present invention; and
FIG. 9 is a cross sectional view of an embodiment of the apparatus for treating an exhaust gas from a light oil combustion apparatus according to the present invention.

### PREFERRED EMBODIMENTS OF THE INVENTION

An aspect of the present invention is to provide a useful activated carbon having particular characteristics.

The activated carbon according to the present invention has pencil hardness of from B to 6B, preferably from 2B to 4B, pore size of 100 - 400 Å, preferably 200 - 350 Å, specific surface area of 150 - 500 m²/g, preferably 200 - 400 m²/g, pore volume of 1.3 - 5.0 ml/g, preferably 1.4 - 3.0 ml/g, and if desired, CEC of 8 - 13, preferably 9 - 12, and comprises carbon microcrystals irregularly arranged and difficultly graphitizable carbon which comprises difficultly graphitizable crosslinking lattices in the gaps among carbon microcrystals.

In the above, CEC (cation exchange capacity) is a capacity of substituting a base. Since fertilizer components are bases, the larger the CEC, the more the fertilizer components can be adsorbed thereto. That is, when the activated carbon of the present invention is mixed with soil, the activated carbon can function as soil. The CEC of the activated carbon is so large that it can adsorb a large amount of fertilizer components. The unit is milligram equivalent (ME). For example, 20 milligram equivalent of CEC means than 100 g of soil can grasp 20 milligram equivalent of base (fertilizer components). CEC of the activated carbon of the present invention is larger than that of commercially available activated carbon as shown in the following table.

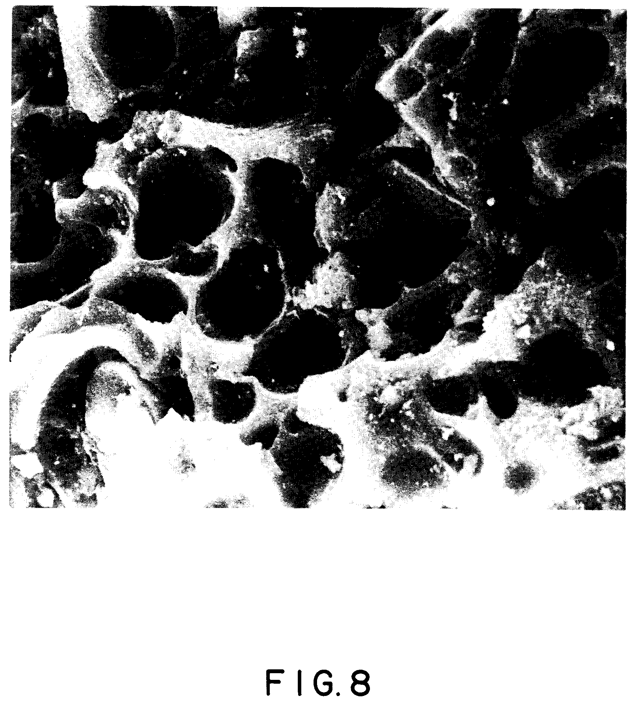

FIG. 8 shows an electron microphotograph of the activated carbon of the present invention. The magnification is 1000 times. This shows large pores, large pore volume and irregular arrangement.

The following table is given for comparing the activated carbon of the present invention with a commercially available activated carbon.

| | Activated carbon of the present invention | Commercially available activated carbon |
|---|---|---|
| Pencil hardness | B - 6B | H |
| Pore size | 100 - 400 Å | 23.5 -32.7 Å |
| Specific surface area | 150 - 500 m²/g | 900 - 1010 m²/g |
| Pore volume | 1.3 - 5.0 ml/g | 0.60 - 1.17ml/g |
| CEC | 8 - 13 | 1 - 7 |

As is clear from the above table, the activated carbon of the present invention has a lower hardness, larger pore size and larger pore volume than a commercially available activated carbon, and can adsorb large particles and molecules. In light of the electron microphotographic structure, seemingly the activated carbon of the present invention can not deodorize and decolor due to its small specific surface area. However, it can surprisingly exhibit excellent deodorizing and decoloring functions. This appears to be attributable to the large pore size and volume.

The activated carbon of the present invention and commercially available activated carbon are further compared as to adsorbability in the following.

| a. Activated carbon of the present invention | |
|---|---|
| Oil: | adsorbed |
| Fungi: | adsorbed |
| Ammonia odor: | adsorbed |
| Speed of deodorizing: | very fast |
| Decoloring (Methylene Blue): | very fast |

| b. Commercially available activated carbon | |
|---|---|
| Oil: | not adsorbed |
| Fungi: | not adsorbed |
| Ammonia odor: | adsorbed with difficulty |
| Speed of deodorizing: | slow; taking a long time |
| Decoloring (Methylene Blue): | ordinary |

The activated carbon of the present invention produced by burning waste tires contains, for example, the following components and shows the following pH.

| Component | % by weight |
|---|---|
| Moisture | 0.43 - 0.61 |
| Carbon (C) | 53.8 - 62.9 |
| Total nitrogen (T-N) | 0.244 - 0.293 |
| Phosphoric acid (P₂O₅) | 0.584 - 0.611 |
| Potassium (K₂O) | 0.525 - 0.574 |
| Calcium (CaO) | 4.62 - 4.69 |
| Magnesium (MgO) | 0.665 - 0.670 |
| Sulfur (S) | 0.31 - 0.37 |
| Vaporizable matters (mostly) | balance |
| Carbon ratio (C/N) | 220 - 226 |
| pH (H₂O) | 10.15 - 10.44 |

The activated carbon is soft (low pencil hardness), but the structure strength is high since the carbon ratio (C/N) relating to the bonding force is as high as about 200.

Carbon ratio of commercially available activated carbon is about 70.

The activated carbon of the present invention can be used for adsorbing various substances. For example, it is used for adsorbing and treating agricultural chemicals, for example, an aqueous solution of Quinoline-copper [bis(quinolin-8-olate) copper]. When 310 mg/l of Quinoline-copper is contained and activated carbons having particle size of 1 mm or less and particle size of 2 mm or less were used, the contents of Quinoline-copper after the treatment were 0.072 mg/l and 0.13 mg/l, respectively.

The activated carbon of the present invention can be also used effectively for removing trihalomethane in water supply, purification of mineral ice, and for removing phenols as starting materials for synthetic resin materials.

Another aspect of the present invention relates to removal of SO₂ and/or Nox in the exhaust gas from heavy oil combustion, for example, from heavy oil combustion boilers by adsorbing SO₂ and/or Nox using the activated carbon of the present invention.

These harmful substances, SO₂ and Nox, can be removed by passing the exhaust gas through a layer containing the activated carbon of the present invention.

According to the present invention, for example, an apparatus of the following structure can be used for carrying out the method of removing SO₂ and/or Nox from said exhaust gas.

The apparatus comprises a conduit for discharging to the open air the exhaust gas formed by the combustion of heavy oil, for example, the exhaust gas from a heavy oil combustion boiler and a screen portion accommodating the activated carbon of the present invention. For example, the screen portion is composed of the activated carbon placed between parallel screens.

The screen surfaces are preferably substantially perpendicular to the axis of the conduit and the cross sectional area of the screen portion perpendicular to the axis of the conduit is preferably larger than the cross sectional area of the conduit so as not to disturb the flow of the exhaust gas as far as possible.

A device capable of exchanging the dirtied or saturated activated carbon as a result of adsorption of SO₂, Nox, soot and the like may be provided in the apparatus.

For example, one end of the screen portion is open to outside, said opening having a means for feeding the new activated carbon, for example, a belt conveyer, and the other end of the screen portion is open to outside and a means for discharging the used activated carbon, for example, a rotary blade is provided near the opening.

Further, the apparatus may be furnished with a means for controlling the feeding of the new activated carbon and the discharging of the used activated carbon by detecting the amount of the discharged used activated carbon.

In addition, there may be added to the apparatus a means for storing a desired amount of new activated carbon to be fed to the apparatus, for example, an amount necessary for one day operation.

The exhaust gas formed by the combustion of heavy oil contains much soot. The activated carbon of the present invention has a small specific surface area, but a large pore size and a large pore volume. Therefore, the activated carbon can adsorb SO₂ and/or Nox without adversely affected by soot. In addition, the activated carbon is so soft (low pencil hardness) that soot is adaptable to the activated carbon and can be adsorbed thereto.

Examples of the method and the apparatus for removing SO₂ and/or Nox of the present invention are explained referring to the drawings.

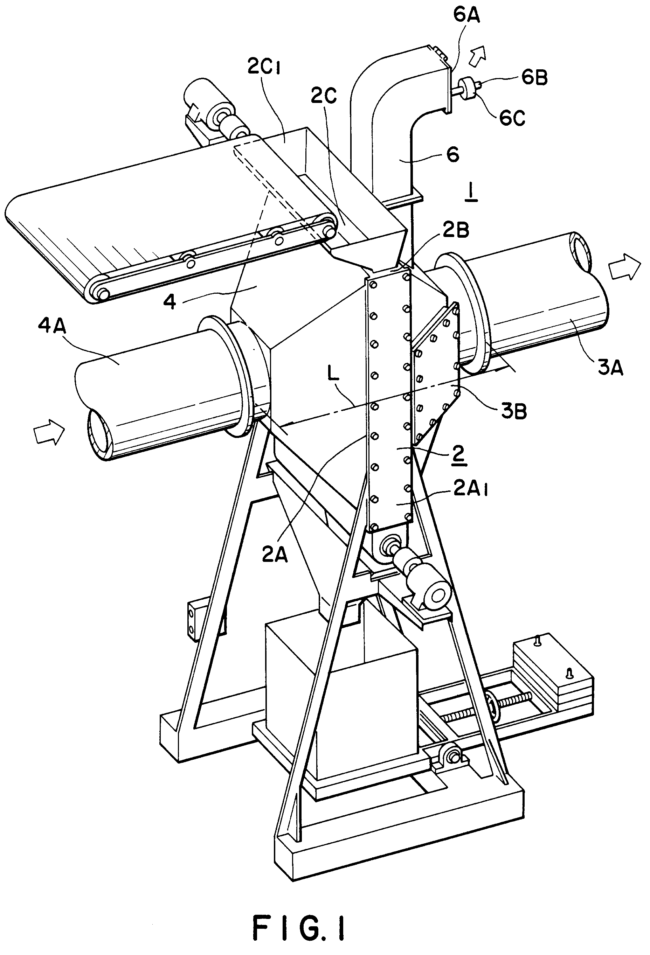

In FIG. 1, 1 denotes an apparatus of the present invention for removing SO₂ and Nox by means of an activated carbon.

2 denotes a screen containing portion composed of left and right vertical walls 2A having a prescribed width, and upper and lower frames 2B provided between said walls and at the upper and the lower ends of said walls, and the said portion having the shape of a regular square.

2A1 denotes an openable screen exchanging hatch fitted to one or both of right and left vertical walls 2A at the screen containing portion.

And, upper opening 2C of the screen containing portion communicates with supplementing hopper 2C1 having an opening open upwards.

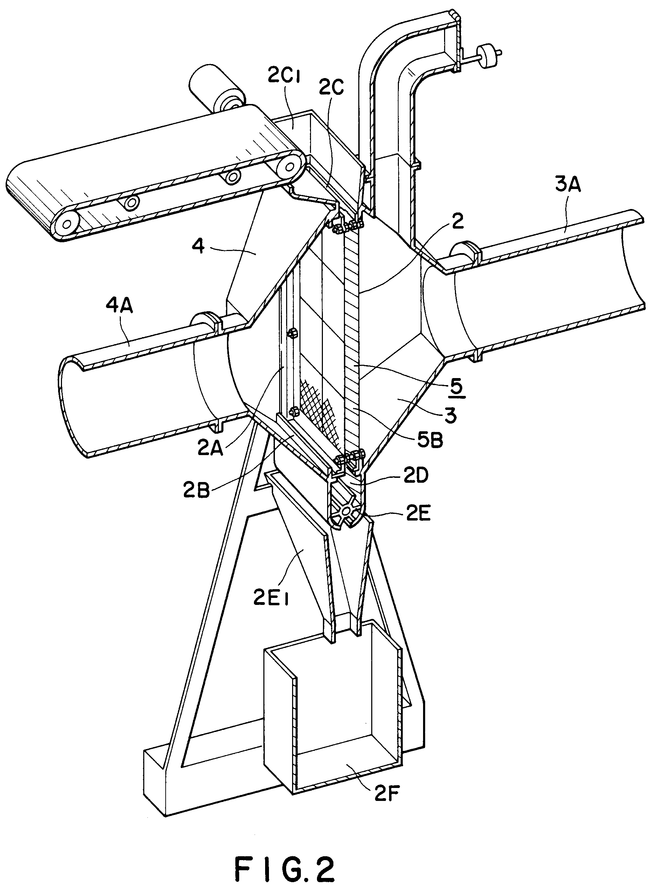

3 (FIG.2) denotes a trumpet-shaped front exhaust gas introducing pipe provided at the front portion of the screen containing portion and communicating with smoke pipe 3 A quite near a chimny (not shown).

This trumpet-shaped front exhaust gas introducing pipe 3 has openable inspection hatch 3B at the side wall of said pipe 3. This hatch serves to clean the screen net when it becomes dirty.

4 denotes a trumpet-shaped rear exhaust gas introducing pipe provided at the rear portion of the screen containing portion and communicating with smoke pipe 4A quite near a heavy oil combustion boiler (not shown).

6 is an increased pressure releasing exhaust gas pipe standing from and communicating with the upper surface of trumpet-shaped front exhaust gas introducing pipe 3 and serves to release the exhaust gas pressure when the adsorption by the activated carbon is saturated.

The upper end opening of the increased pressure releasing exhaust gas pipe is provided with openable lid 6A and said lid is furnished with lever 6B having weight 6C corresponding to the exhaust gas pressure.

L denotes the length between the end of traumpet-shaped front exhaust gas introducing pipe 3 and the end of trumpet-shaped rear exhaust gas introducing pipe 4.

In FIG. 2, lower discharging opening 2D is furnished with rotary blade 2E capable of stopping falling of and discharging of activated carbon 5B contained in the screen containing portion by means of screen frames.

2E1 is a chute communicating with the lower surface of rotary blade 2E and the lower end of 2E1 is furnished with a receiving box 2F for the used activated carbon.

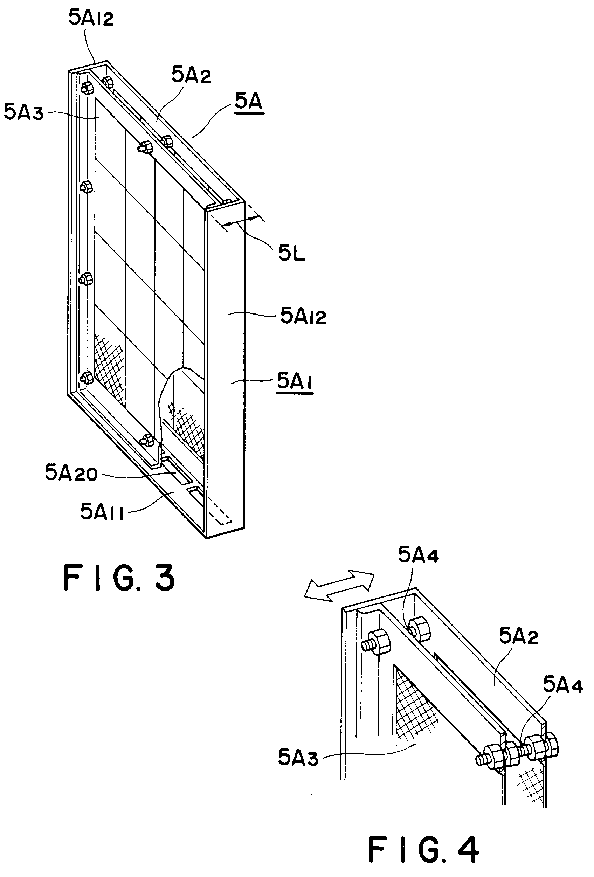

Screen portion 5 removably fitted to screen containing portion 2 is composed of screen frame 5A (FIG. 3) and activated carbon 5B packed in said screen frame 5A.

2A, 2B, 2C, 2C1, 3, 3A, 4 and 4A denote the same members or portions corresponding to the like reference numerals in FIG. 1.

In FIG. 3, screen frame 5A is composed of frame portion 5A1 and front and rear screens 5A2 and 5A3 provided at the front surface and the rear surface of the frame portion, respectively.

Frame portion 5A1 is composed of bottom plate 5A11 of a prescribed width and left and right vertical walls 5A12 standing from the left and the right ends of the bottom plate, respectively.

Further, the bottom plate 5A11 is furnished with several holes 5A20 for falling the used activated carbon.

Further, front screen 5A2 is fitted to the front edge of frame portion 5A1 and rear screen 5A3 is fitted forward and backward adjustably to front screen 5A2.

5L denotes the thickness of the frame portion. FIG. 4 is a partly enlarged oblique view of screen portion in FIG. 3.

5A4 is a connecting bolt for supporting the rear screen forward and backward movably.

In such a way as above, the volume of screen frame 5A (FIG. 3) can be appropriately adjusted by moving screen 5A3 forward or backward.

Front and rear screens 5A2 and 5A3 are composed of a regular square frame to which a net of a prescribed mesh is fitted. The mesh is 2 mm mesh.

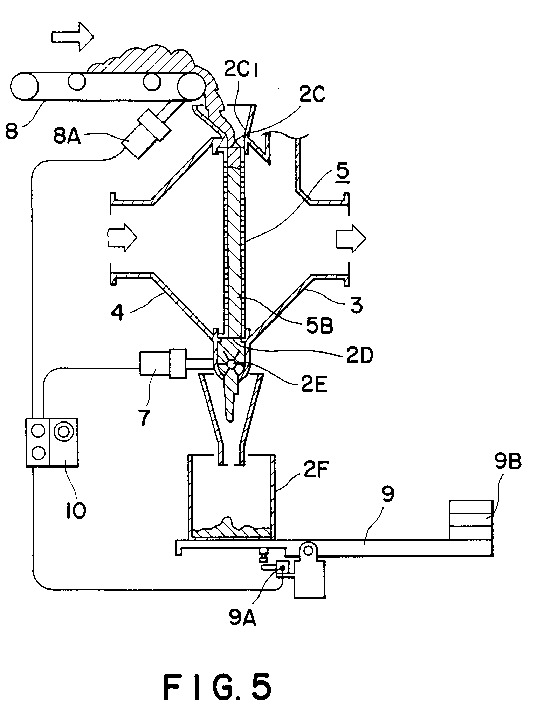

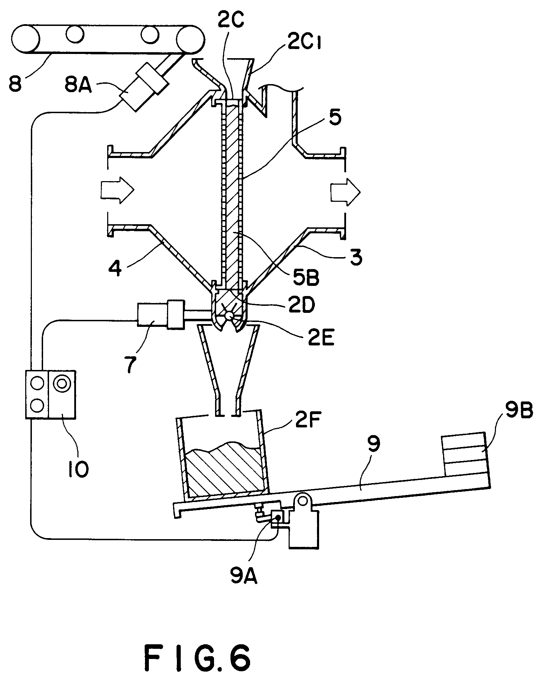

In the following there are explained mechanisms of discharging of the used activated carbon in screen portion 5 and feeding of new activated activated carbon referring to FIG. 5 and FIG. 6.
Motor 7 is fitted to rotary blade 2E.

Conveyer 8 for feeding new activated carbon to supplementing hopper 2C1 is provided, and the conveyer is furnished with motor 8A.

Receiving box 2F for accepting the used activated carbon is placed on holder 9 capable of actuating sensor 9A by its weight.

9B is a counter weight. When timer switch 10 becomes "ON", motor 7 and motor 8A are driven to discharge the used activated carbon while feeding new activated carbon, and when the used activated carbon is accumulated in receiving box 2F, sensor 9A is actuated to stop motor 7 and motor 8A.

The purification action to the exhaust gas is naturally effected continuously.

When activated carbon 5B is dirtied with SO₂ and Nox, in view of the experimental data available heretofore, motor 7 is actuated by timer switch 10 to drive rotary blade 2E at intervals of 3 - 4 hours so as to let fall activated carbon 5B through discharge opening 2D simultaneously with supplementing new activated carbon through supplementing hopper 2C1 by way of upper opening of screen portion 2C.

While supplementing new activated carbon, the exhaust gas from the boiler is passed through the smoke pipe, trumpet-shaped front exhaust gas introducing pipe 3, screen portion 5, and trumpet-shaped rear exhaust gas introducing pipe 4 to adsorb SO₂ and Nox in the passing exhaust gas by using activated carbon 5B, and the resulting exhaust gas containing reduced amounts of SO₂, Nox and the like is released from a chimney to the open air.

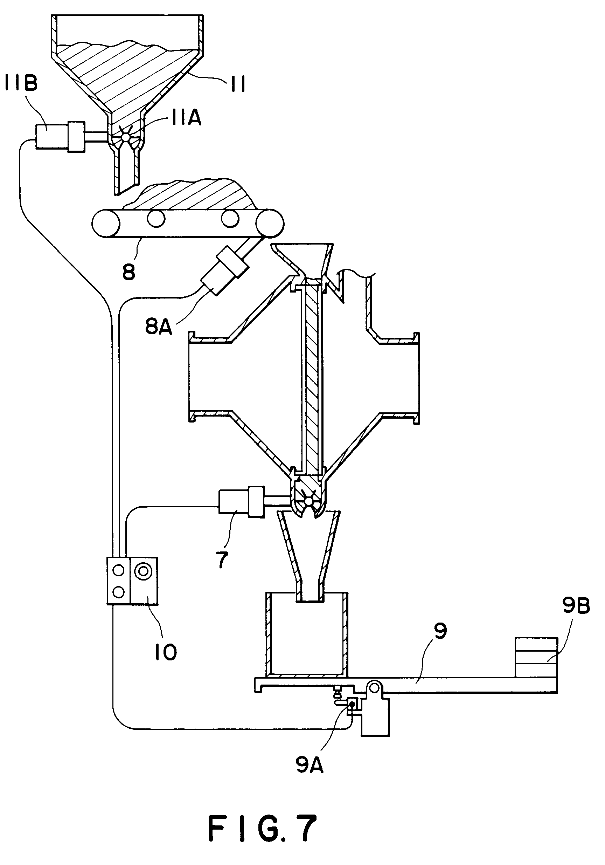

As shown in FIG. 7, the apparatus may be constructed such that hopper 11 having rotary blade 11A can supply the new activated carbon to conveyer 8, the capacity of hopper 11 being the weight of activated carbon for one day operation, for example, 100 kg, and motor 11B capable of driving rotary blade 11A is actuated by timer switch 10.

7, 8A, 9, 9A, and 9B denote the same members or portions as above.

The present inventors made experiments under the following conditions.

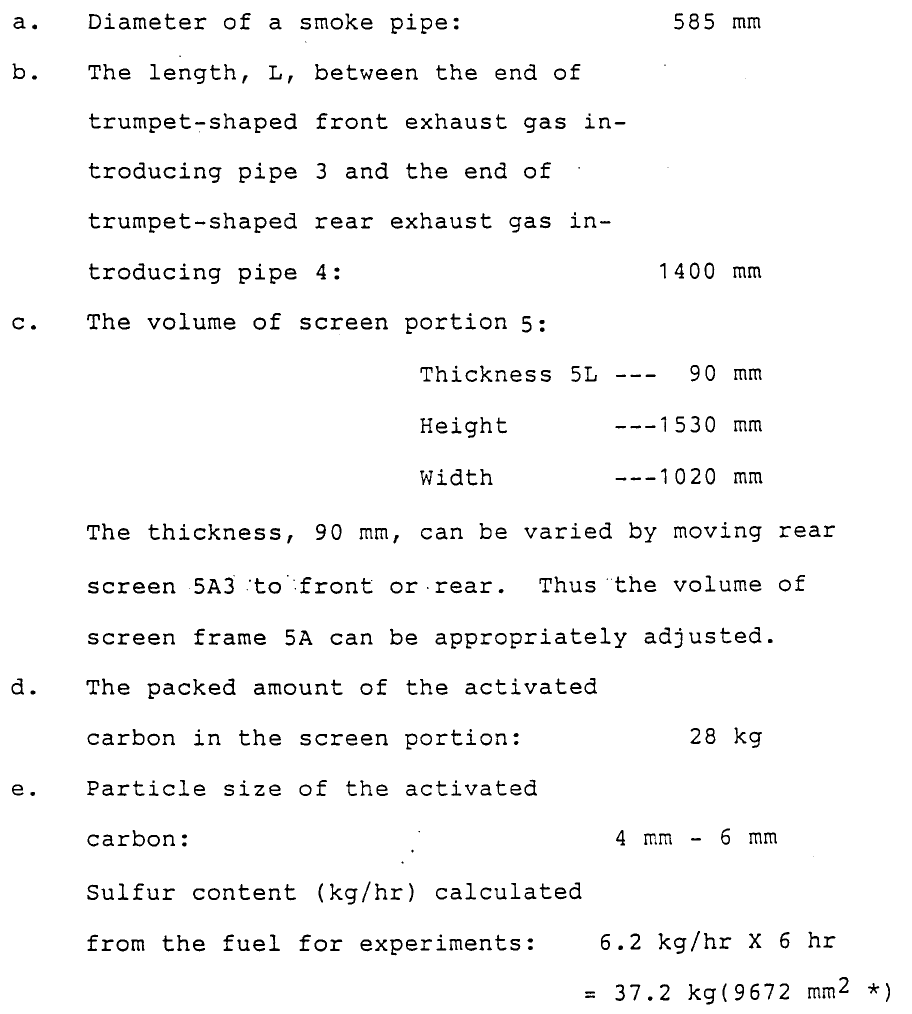

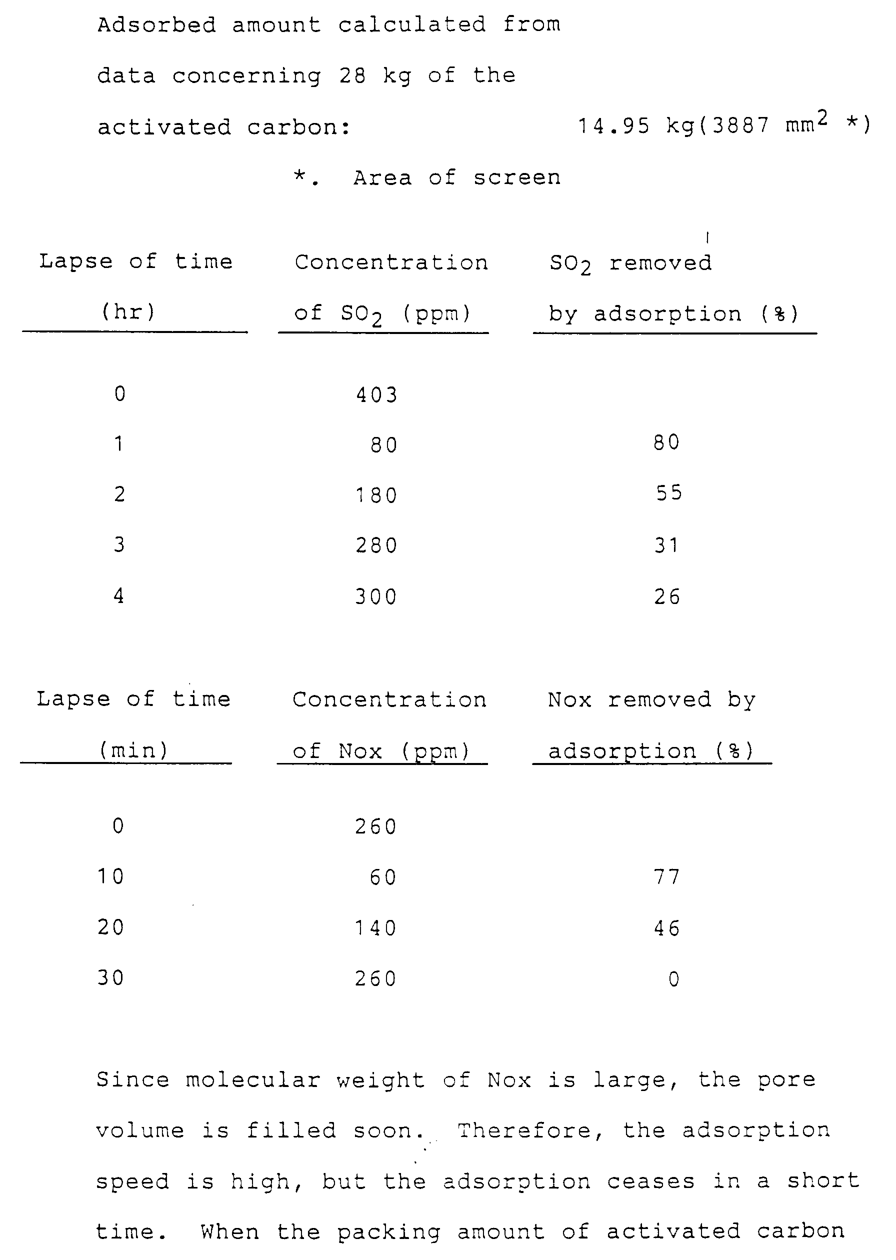

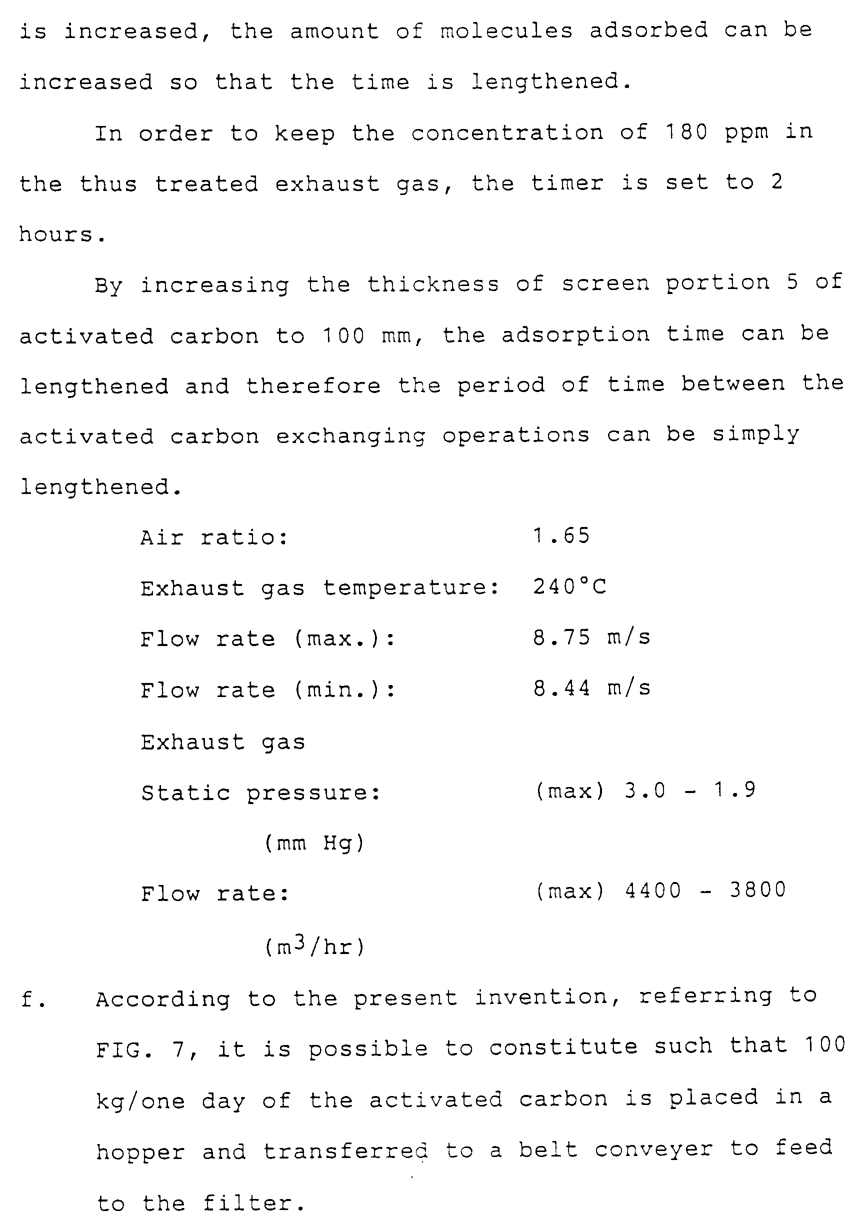

The activated carbon of the present invention can be produced by burning waste tires. For example, an activated carbon produced by burning waste tires in a boiler as disclosed in Japanese Patent Application Laid-open No. Hei 1-127812 may be used.

The activated carbon of the present invention can be produced by burning waste tires containing metal cord such as steel cord, silicon steel cord and the like at 400 - 900°C, preferably 700 - 800°C, in the presence of oxygen and in the presence of CO₂ and water vapor.

Air used for the combustion of the waste tires is preferably of high humidity, for example, relative humidity of at least 60 %, if desired, water is added to the combustion atmosphere in an appropriate way.

After formation of the activated carbon, metal cord fragments are removed, for example, by using a magnet. Then the resulting activated carbon particles are subjected to screening to obtain the particles in a desired particle size range. Therefore, pelletization is not necessary. Naturally, if necessary, particles of a size less than the desired particle size may be pelletized to produce desired particles.

This production procedure is quite different from a method comprising strongly heating a carbon-containing material in the absence of air (oxygen) to effect dry distillation followed by adding active hydrogen, or a method comprising fully carbonizing a carbonaceous material and then activating the resulting carbon by steam or a treatment with chemicals.

As is clear from above, the activated carbon of the present invention can be produced without a multiple-step method including an activation step or complicated procedures as in conventional methods.
The mechanism of producing the activated carbon of the present invention having the excellent properties in a single step is not clearly understood. Although it is not desired to limit the invention to any particular theory, it is believed that the metal cord (a twisted thin metal wire) is broken into fragments during the combustion and scattered in the waste tire materials to act in a catalyst-like manner or act physically on the materials, and further CO₂ and water present in the combustion atmosphere simultaneously activate the carbonaceous material.

The amount of the metal cord is preferably at least 1/3 times the weight of the waste tire. When said amount is less than 1/3 times, the resulting adsorption ability is poor. More preferably, the amount is from about 4/10 times to about 6/10 times the weight of the waste tire.

According to the present invention, an exhaust gas from a light oil combustion apparatus, for example,diesel engine used for various purposes, for example, diesel engine for an electric generator for private purposes, is treated so as to remove harmful components such as SO₂ and Nox.

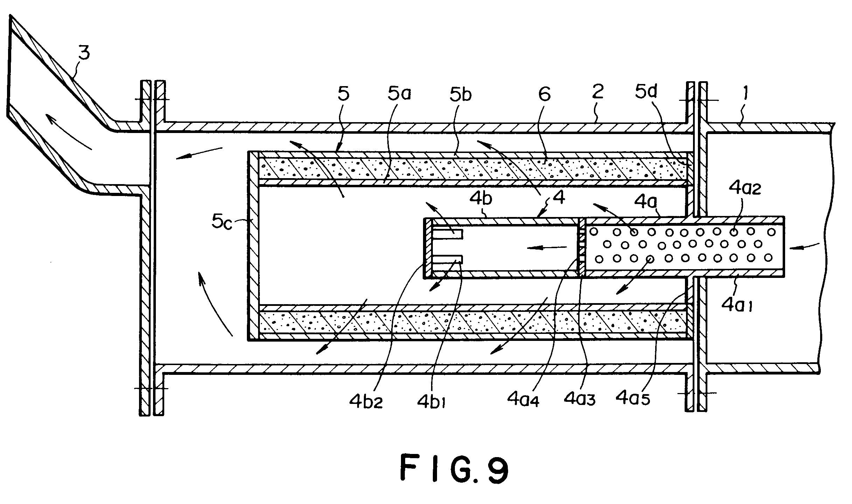

Referring to FIG. 9, the apparatus for treating an exhaust gas from a light oil combustion apparatus containing SO₂ and Nox as the harmful components comprises a muffler 1 connected with the light oil combustion apparatus, an exhaust pipe 2 containing an exhaust gas introducing and exhausting pipe 4 provided with multiple gas discharging small holes 4a₂, 4a₄ and a plurality of gas escape ports 4b₁ and a filter pipe 5, and a gas outlet pipe 3 connected with the exhaust pipe 2.

The filter pipe 5 is composed of an inner layer filter pipe 5a and an outer layer filter pipe 5b, an activated carbon 6 packed in the space between the inner layer filter pipe 5a and the outer layer filter pipe 5b, and a blind plate 5c blocking one end of the filter pipe 5. The exhaust gas introducing and exhausting pipe 4 being provided in the inner space of the inner layer filter pipe 5a.

The exhaust gas introducing and exhausting pipe 4 preferably comprises a perforated pipe portion 4a having multiple small holes 4a₂ for passing gas at the pipe wall 4a₁ and a rear end wall 4a₃ provided with multiple small holes 4a₄ for passing gas, and a pipe portion 4b provided with a plurality of gas escape ports 4b₁ at the pipe wall near the end portion and a blocking plate 4b₂ at the top end portion.

As the activated carbon, there may be used various activated carbon as defined above. However, an activated carbon produced by burning waste tires is preferable, and further an activated carbon having a particular structure and particular characteristics which may be produced by burning waste tires is more preferable.

An exhaust gas from a light oil combustion apparatus is introduced into an exhaust gas introducing and exhausting pipe through a muffler, passes through many gas discharging small holes of the perforated pipe portion and a plurality of gas escape ports and diffuses into the activated carbon layer through a metal net of an inner layer filter pipe (for example, 3 mm mesh).

The exhaust gas is treated in the inner layer portion of the activated carbon, that is, SO₂ and Nox are adsorbed to the activated carbon, and SO₂ and Nox which are not adsorbed by this primary treatment are subjected to a secondary treatment in the outer layer portion of the activated carbon for adsorbing the remaining SO₂ and Nox before the exhaust gas passes through a metal net of the outer layer filter pipe (for example, 2 mm mesh).

The concentrations of SO₂ and Nox in the exhaust gas having passed the outer layer filter pipe is much lower than those before the treatment.

Further, according to a method for treating an exhaust gas from a light oil combustion apparatus, the harmful components such as SO₂ , Nox and the like are removed by adsorbing the harmful compnents to an activated carbon produced by burning waste tires or an activated carbon having a particular structure and particular characteristics.

An example of the present invention is shown below referring to FIG. 9.

One end of a muffler 1 is connected with a flue of a diesel engine using a light oil and the other end of muffler 1 is connected with one end of an exhaust pipe 2. The other end of exhaust pipe 2 is connected with a gas outlet pipe 3.

Muffler 1, exhaust pipe 2 and gas outlet pipe 3 are connected by fixing the flanges with bolts and nuts.

An exhaust gas introducing and exhausting pipe 4 (made of metal) is composed of a perforated pipe portion 4a provided with an opening at the forward end (right end in FIG. 1), a pipe wall 4a₁ having many small holes 4a₂ and a rear end lid 4a₃(left end in FIG. 1) having many small holes 4a₄ and a pipe portion 4b of which the forward end is connected with rear end lid 4a₃ and which has a plurality (for example, four) of gas escape ports 4b₁ at the pipe wall near the end portion and a blocking plate 4b₂ at the top end portion.

Perforated pipe portion 4a is provided with a flange 4a₅, for example, at approximately middle portion in the longitudinal direction, and the flange 4a₅ is fixed to a flange of muffler 1 (for example, using bolts and nuts).

Filter pipe 5 is composed of inner layer filter pipe 5a made of a 3 mm mesh metal net (for example, stainless steel), outer layer filter pipe 5b made of a 2 mm mesh metal net (for example, stainless steel), an activated carbon layer 6 packed in the space between the pipes 5a and 5b, a blind plate 5c (for example, stainless steel) blocking the end portion and an annular frame plate 5d supporting the inner and outer pipes 5a and 5b and activated carbon layer 6 which is fixed to an end of the filter pipe opposite to blind plate 5c.

Filter pipe 5 is removably fitted to flange 4a₅ of perforated pipe portion 4a by means of annular frame plate 5d.

In the above mentioned apparatus for treating the exhaust gas, the exhaust gas entering muffler 1 from a diesel engine flows into perforated pipe portion 4a of exhaust gas introducing and exhausting pipe 4 and then one part of the gas is discharged through small holes 4a₂ (for example, 9 mm in diameter) and diffused into activated carbon layer 6 through inner layer filter pipe 5a of filter pipe 5.

The other part of the gas flows into pipe portion 4b through small holes 4a₄ (for example, 3 mm in diameter) at a large flow rate, collides against blocking plate 4b₂, discharges through gas escape ports 4b₁, then passes through inner layer filter pipe 5a and diffuses into activated carbon layer 6. In this diffusion step, the diffusion speed is so large (due to the high flow speed into pipe portion 4b) that the diffusion of the exhaust gas passing through small holes 4a₂ and diffusing earlier into activated carbon layer 6 than this exhaust gas passing through gas escape ports 4b₁ is facilitated.

The exhaust gas diffuses into the inner layer portion of the activated carbon 6 and SO₂ and Nox are adsorbed, but the remaining SO₂ and Nox are adsorbed in the outer layer portion of the activated carbon 6, and then discharged to exhaust pipe 2 through the outer layer filter pipe 5b.

The exhaust gas thus treated leaves exhaust pipe 2 and is discharged to atmosphere through gas outlet pipe 3. When an activated carbon produced by burning waste tires, having average 3 mm in size was used in the above-mentioned example where filter pipe 5 comprised inner layer filter pipe 5a composed of 3 mm mesh metal net and outer layer filter pipe 5b composed of 2 mm mesh metal net, SO₂ concentration of 42 p.p.m. and NO₂ concentration of 59 p.p.m. in an exhaust gas fed decreased to 25 p.p.m. and 24 p.p.m. after the treatment, respectively, that is, they were decreased by 40 % and 60 %, respectively. Further, under the similar conditions, 70 p.p.m. NO₂ and 29 p.p.m. SO₂ in an exhaust gas from a light oil combustion were reduced to 17 p.p.m. NO₂ and 6 p.p.m. SO₂, respectively, after the treatment.

Activated carbon produced by burning waste tires can be used in the present invention. An example of such activated carbon is disclosed in Japanese Patent Application Laid-open No. Hei 1-127812 (1989) in which waste tires are burned as a fuel for a boiler and the resulting cinder can be used as an activated carbon. Activated carbon used in this invention may be preferably produced by burning waste tire under particular conditions as mentioned above.

Further, in this treatment of an exhaust gas from a light oil combustion, there is preferably used the abovementioned activated carbon having a particular structure and particular characteristics, that is, the activated carbon has pencil hardness of from B to 6B, preferably from 2B to 4B, pore size of 100 - 400 Å, preferably 200-350 Å, specific surface area of 150 - 500 m²/g, preferably 200 - 400 m²/g, pore volume of 1.3 - 5.0 ml/g, preferably 1.4 - 3.0 ml/g, and if desired, CEC of 8 - 13, preferably 9 - 12, and comprises carbon microcrystals irregularly arranged and difficultly graphitizable carbon which comprises difficultly graphitizable crosslinking lattices in the gaps among carbon microcrystals.

In view of the foregoing, the present invention gives at least partly the following advantages.
(1) The activated carbon has a large pore volume and, due to the large pore volume, molecules of sulfur components and nitrogen components are adsorbed at a high speed. Since the pore volume is large, adsorption can be effected within a short time in correspondence with the molecular structures of SO₂ and Nox.
(2) 80 % of harmful components in acidic rain is sulfur oxide (SO₂) and 20 % thereof is nitrogen oxide (Nox), and the apparatus of the present invention can adsorb them.
(3) The apparatus of the present invention is simple. A cartridge system can be used in which the volume of the activated carbon is variable (e.g. by changing the space between the screens) depending upon the volume of the exhaust gas.
(4) Adsorption of SO₂ takes time so that the used activated carbon is exchanged by feeding a new activated carbon through a supplementing hopper by driving a rotary blade using a timer relay matching thereto.
(5) When waste tires are burned to prepare the activated carbon, activated carbon particles of convenient size have been already formed so that a drying step and a water-soaking procedure to remove air are not necessary.
(6) When the capacity of the activated carbon used has reached the quantitative limit judging from the flow speed and flow rate of a harmful exhaust gas and the pressure drop has reached the limit judging from the exhaust gas resistance, discharging and feeding of activated carbon are repeated by means of a timer relay while releasing the pressure.
(7) The largest advantage is that the adsorption speed of Nox by the activated carbon of the present invention is much faster than that by a commercially available activated carbon, and the adsorption capacity (weight of adsorbate per unit weight of adsorbent) of SO₂ by the activated carbon is about 1.7 times that by commercially available activated carbons. Further, resistance to gas flow is small and the apparatus can be compact.
(8) Since the CEC is larger than that of commercially available activated carbon, the activated carbon after having adsorbed SO₂ and Nox (i.e. after used) can be used by mixing with peat, or with cattle, fowl or pig droppings to deodorize and then used as a compost.
(9) 50 % or more of Nox in the exhaust gas from a heavy oil combustion boiler can be removed. The cost of the activated carbon of the present invention is half of that of commercially avilable activated carbon.
(10) The apparatus of the present invention is of a dry type different from wet type removing apparatuses, and the production of the activated carbon is simpler than that of the wet type adsorbent and the activated carbon can be simply inserted to and discharged from the filter resulting in a low initial cost. The cost is one tenth as much.
(11) The activated carbon of the present invention can be used as a soil improving agent by burying said carbon in or mixing said carbon with soil. For example, acidic soil water can be neutralized so that lime or fused phosphate fertilizer is not necessary. The high CEC results in good holding of fertilizer. The activated carbon which has adsorbed sulfur component and nitrogen component also can be used as a soil improving agent and the sulfur and nitrogen components act as fertilizers.
   Further, atmospheric pollution caused by low quality oils can be overcome by using the filter of the present invention. In particular, the present invention is suitable for heavy oil of high sulfur content.
(12) An exhaust gas from a light oil combution containing harmful components such as SO₂ and Nox can be effectively treated. An activated carbon produced from waste tires at low cost can be used here.

## Claims

1. An activated carbon which comprises irregularly arranged carbon microcrystals and difficultly graphitizable carbon which comprises difficultly graphitizable crosslinking lattices in the gaps among the carbon microcrystals and has a pencil hardness of from B to 6B, a pore size of 100 - 400 Å, a specific surface area of 150 - 500 m²/g, and a pore volume of 1.3 - 5.0 ml/g.

2. The activated carbon according to claim 1 which has a cation exchange capacity of 8 - 13.

3. The activated carbon according to claim 1 or 2 in which the pencil hardness is from 2B to 4B, the pore size is 200 - 350 Å, the specific surface area is 200 - 400 m²/g and the pore volume is 1.4 - 3.0 ml/g.

4. The activated carbon according to claim 3 in which the cation exchange capacity is 9 - 12.

5. A method for producing the activated carbon of any one of claims 1 to 4 which comprises burning waste tires containing a metal cord at 400 - 900 °C in the presence of oxygen and in the presence of CO₂ and water vapor.

6. The method according to claim 5 in which the metal cord is a steel cord.

7. The method according to claim 5 in which the metal cord is a silicon steel cord.

8. The method according to claim 5, 6 or 7 in which the combustion temperature is 700 - 800 °C.

9. The method according to any one of claims 5 to 8 in which the metal cord is contained in an amount of 1/3 times the weight of the waste tire or more.

10. The method according to any one of claims 5 to 8 in which the metal cord used is contained in an amount of from 4/10 times to 6/10 times the weight of the waste tire.

11. A method for removing SO₂ and/or NOx from exhaust gas formed by combustion of heavy oil which comprises passing the exhaust gas through the activated carbon according to any one of claims 1 to 4.

12. The method according to claim 11 in which the exhaust gas results from a heavy oil combustion boiler.

13. The method according to claim 11 in which the activated carbon used is produced by burning waste tires.

14. An apparatus for removing SO₂ and/or NOx from exhaust gas formed by combustion of heavy oil which comprises a conduit for discharging the exhaust gas to the open air and a screen portion accommodating the activated carbon of any one of claims 1 to 4 fitted to and across said conduit.

15. The apparatus according to claim 14 in which one end of the screen portion is open to outside, said opening having a means for feeding new activated carbon, and the other end of the screen portion is open to outside and a means for discharging used activated carbon is provided near the opening.

16. The apparatus according to claim 15 provided with a means for controlling the feeding of the new activated carbon and the discharging of the used activated carbon by detecting the amount of the discharged used activated carbon.

17. The apparatus according to claim 14 in which the activated carbon used is produced by burning waste tires.

18. A method for treating an exhaust gas resulting from a light oil combustion apparatus which comprises adsorbing and removing harmful components in the exhaust gas with the activated carbon of any one of claims 1 to 4.

19. The method according to claim 18 in which the activated carbon used is produced by burning waste tires.

20. An apparatus for treating an exhaust gas resulting from a light oil combustion apparatus which comprises:
a muffler connected with the light oil combustion apparatus,
an exhaust pipe containing an exhaust gas introducing and exhausting pipe provided with multiple small gas discharging holes and a plurality of gas escape ports and a filter pipe, and
a gas outlet pipe connected with the exhaust pipe,
said filter pipe being composed of an inner layer filter pipe and an outer layer filter pipe, the activated carbon of any one of claims 1 to 4 being packed in the space between the inner layer filter pipe and the outer layer filter pipe, and a blind plate blocking one end of the filter pipe, and the exhaust gas introducing and exhausting pipe being provided in the inner space of the inner layer filter pipe.

21. The apparatus according to claim 20 in which the exhaust gas introducing and exhausting pipe comprises
a perforated pipe portion having multiple small holes for passing gas through the pipe wall and a rear end lid having multiple small holes for allowing gas pass through, and
a pipe portion provided with a plurality of gas escape ports at the pipe wall near the end portion and a blocking plate at the top end portion.

22. The apparatus according to claim 20 or 21 in which the activated carbon used is produced by burning waste tires.

## Patentansprüche

1. Aktivkohle, die unregelmäßig angeordnete Kohlenstoffmikrokristalle und schwierig zu graphitisierenden Kohlenstoff umfaßt, der schwierig zu graphitisierende Vernetzungsgitter in den Lücken zwischen den Kohlenstoffmikrokristallen umfaßt, und eine Bleistifthärte von B bis 6B, eine Porengröße von 100 - 400 Å, eine spezifische Oberfläche von 150 - 500 m²/g und ein Porenvolumen von 1.3 - 5.0 ml/g aufweist.

2. Aktivkohle nach Anspruch 1, die eine Kationenaustauscherkapazität von 8 - 13 aufweist.

3. Aktivkohle nach Anspruch 1 oder 2, in der die Bleistifthärte 2B bis 4B, die Porengröße 200 - 350 Å, die spezifische Oberfläche 200 - 400 m²/g und das Porenvolumen 1.4 - 3.0 ml/g beträgt.

4. Aktivkohle nach Anspruch 3, in der die Kationenaustauscherkapazität 9 - 12 beträgt.

5. Verfahren zur Herstellung von Aktivkohle nach einem der Ansprüche 1 bis 4, umfassend das Verbrennen von Altreifen, die einen Metallkord enthalten, bei 400 - 900°C in Gegenwart von Sauerstoff und in Gegenwart von CO₂ und Wasserdampf.

6. Verfahren nach Anspruch 5, wobei der Metallkord ein Stahlkord ist.

7. Verfahren nach Anspruch 5, wobei der Metallkord ein Siliciumstahlkord ist.

8. Verfahren nach Anspruch 5, 6 oder 7, wobei die Verbrennungstemperatur 700 - 800°C beträgt.

9. Verfahren nach einem der Ansprüche 5 bis 8, wobei der Metallkord in einer Menge von 1/3 des Gewichts des Altreifens oder mehr enthalten ist.

10. Verfahren nach einem der Ansprüche 5 bis 8, wobei der verwendete Metallkord in einer Menge von 4/10 bis 6/10 des Gewichts des Altreifens enthalten ist.

11. Verfahren zur Entfernung von SO₂ und/oder NOx aus dem durch die Verbrennung von Schweröl gebildeten Abgas, umfassend das Durchleiten des Abgases durch die Aktivkohle nach einem der Ansprüche 1 bis 4.

12. Verfahren nach Anspruch 11, wobei das Abgas aus einer Schwerölverbrennungsanlage kommt.

13. Verfahren nach Anspruch 11, wobei die verwendete Aktivkohle durch Verbrennung von Altreifen hergestellt wird.

14. Apparatur zur Entfernung von SO₂ und/oder NOx aus dem durch die Verbrennung von Schweröl gebildeten Abgas, umfassend eine Leitung zur Abführung des Abgases an die freie Luft und ein Filterteil, das die Aktivkohle nach einem der Ansprüche 1 bis 4 aufnimmt und das in Querrichtung an der Leitung angebracht ist.

15. Apparatur nach Anspruch 14, in der ein Ende des Filterteils zur Außenseite offen ist, wobei die Öffnung eine Vorrichtung zur Zugabe neuer Aktivkohle aufweist, und das andere Ende des Filterteils zur Außenseite offen ist und eine Vorrichtung zur Entnahme der verbrauchten Aktivkohle in der Nähe der Öffnung angebracht ist.

16. Apparatur nach Anspruch 15, versehen mit einer Vorrichtung zur Kontrolle der Zugabe neuer Aktivkohle und Entnahme der verbrauchten Aktivkohle durch Feststellung der Menge der entnommenen verbrauchten Aktivkohle.

17. Apparatur nach Anspruch 14, wobei die verwendete Aktivkohle durch Verbrennung von Altreifen hergestellt wird.

18. Verfahren zur Behandlung eines aus einer Leichtölverbrennungapparatur stammenden Abgases, umfassend das Adsorbieren und Entfernen schädlicher Bestandteile im Abgas mit der Aktivkohle nach einem der Ansprüche 1 bis 4.

19. Verfahren nach Anspruch 18, wobei die verwendete Aktivkohle durch Verbrennung von Altreifen hergestellt wird.

20. Apparatur zur Behandlung eines aus einer Leichtölverbrennungsapparatur stammenden Abgases, umfassend:
einen mit der Leichtölverbrennungsapparatur verbundenen Auspufftopf, ein Abgasrohr, das ein Abgaseinleitungs- und -ausstoßrohr enthält, das mit einer Vielzahl kleiner Gasabgabelöcher und einer Mehrzahl Gasauslaßöffnungen und einem Filterrohr versehen ist, und ein Gasauslaßrohr, das mit dem Abgasrohr verbunden ist,
wobei das Filtertohr aus einem Innenschicht-Filtertohr und einem Außenschicht-Filterrohr besteht, wobei die Aktivkohle nach einem der Ansprüche 1 bis 4 in den Zwischenraum zwischen dem Innenschicht-Filterrohr und dem Außenschicht-Filterrohr gefüllt ist, und eine Verschlußplatte das eine Ende des Filterrohrs verschließt, und
das Abgaseinleitungs- und -ausstoßrohr sich im Innenraum des Innenschicht-Filterrohrs befinden.

21. Apparatur nach Anspruch 20, in der das Abgaseinleitungs- und ausstoßrohr einen perforierten Rohrteil mit einer Vielzahl kleiner Locher zur Durchleitung von Gas durch die Rohrwand und eine rückwärtige Endklappe mit einer Vielzahl kleiner Locher zum Durchlassen des Gases umfaßt, und
ein Rohrteil, versehen mit einer Vielzahl von Gasauslaßöffnungen an der Rohrwand in der Nähe des Endteils und einer Blockierungsplatte am oberen Endteil.

22. Apparatur nach Anspruch 20 oder 21, in der die verwendete Aktivkohle durch Verbrennung von Altreifen hergestellt wird.

## Revendications

1. Charbon actif qui comprend des microcristaux de carbone disposés irrégulièrement et du carbone qui peut être difficilement graphité qui comprend des réseaux de réticulation qui peuvent être difficilement graphités dans les espaces parmi les microcristaux de carbone et présente une dureté de crayon de B à 6B, une taille de pores de 100 - 400 Å, une surface spécifique de 150 -500 m²/g et un volume de pores de 1,3 -5,0 ml/g.

2. Charbon actif selon la revendication 1 qui présente une capacité d'échange de cations de 8 - 13.

3. Charbon actif selon la revendication 1 ou 2, dans lequel la dureté de crayon est de 2B à 4B, la taille de pores est de 200 - 350 Å, la surface spécifique est de 200 - 400 m²/g et le volume de pores est de 1,4 - 3,0 ml/g.

4. Charbon actif selon la revendication 3, dans lequel la capacité d'échange de cations est de 9 - 12.

5. Procédé pour produire le charbon actif de l'une quelconque des revendications 1 à 4 qui consiste à brûler des pneus usés contenant un câble métallique à 400 - 900°C en présence d'oxygène et en présence de CO₂ et de vapeur d'eau.

6. Procédé selon la revendication 5, dans lequel le câble métallique est un câble en acier.

7. Procédé selon la revendication 5, dans lequel le câble métallique est un câble en acier au silicium.

8. Procédé selon la revendication 5, 6 ou 7, dans lequel la température de combustion est de 700 - 800°C.

9. Procédé selon l'une quelconque des revendications 5 à 8, dans lequel le câble métallique est contenu dans une quantité de 1/3 fois le poids des pneus usés ou supérieure.

10. Procédé selon l'une quelconque des revendications 5 à 8, dans lequel le câble métallique utilisé est contenu dis une quantité de 4/10 fois à 6/10 fois le poids des pneus usés.

11. Procédé pour éliminer SO₂ et/ou NOx de gaz de combustion formés par la combustion d'huile lourde qui consiste à faire passer les gaz de combustion à travers le charbon actif selon l'une quelconque des revendications 1 à 4.

12. Procédé selon la revendication 11, dans lequel les gaz de combustion résultent d'une chaudière de combustion d'huile lourde.

13. Procédé selon la revendication 11, dans lequel le charbon actif utilisé est produit en brûlant des pneus usés.

14. Appareil pour éliminer SO₂ et/ou NOx de gaz de combustion formés par la combustion d'huile lourde qui comprend une canalisation pour évacuer les gaz de combustion à l'air libre et une partie de tamis logeant le charbon actif de l'une quelconque des revendications 1 à 4 adaptée à et en travers de ladite canalisation.

15. Appareil selon la revendication 14, dans lequel une extrémité de la partie de tamis est ouverte sur l'extérieur, ladite ouverture présentant un moyen pour introduire du charbon actif neuf, et l'autre extrémité de la partie de tamis est ouverte sur l'extérieur, et un moyen pour décharger le charbon actif usé est fourni près de l'ouverture.

16. Appareil selon la revendication 15 muni d'un moyen pour réguler l'introduction du charbon actif neuf et l'évacuation du charbon actif usé en détectant la quantité de charbon actif usé déchargée.

17. Appareil selon la revendication 14, dans lequel le charbon actif usé est produit en brûlant des pneus usés.

18. Procédé pour traiter des gaz de combustion résultant d'un appareil de combustion d'huile fluide qui consiste à adsorber et à éliminer des constituants nocifs dans les gaz de combustion avec le charbon actif de l'une quelconque des revendications 1 à 4.

19. Procédé selon la revendication 18, dans lequel le charbon actif utilisé est produit en brûlant des pneus usés.

20. Appareil pour traiter des gaz de combustion résultant d'un appareil de combustion d'huile fluide qui comprend :
un échappement raccordé à l'appareil de combustion d'huile fluide,
un conduit d'évacuation contenant un tuyau d'introduction et d'évacuation de gaz de combustion muni de multiples petits trous d'évacuation de gaz et de nombreux orifices d'échappement de gaz et d'un tuyau-filtre, et
un tuyau de sortie de gaz raccordé au conduit d'évacuation,
ledit tuyau-filtre étant constitué d'un tuyau-filtre de couche interne et d'un tuyau-filtre de couche externe, le charbon actif de l'une quelconque des revendications 1 à 4 étant déposé dans l'espace entre le tuyau-filtre de couche interne et le tuyau-filtre de couche externe et une plaque d'obstruction bloquant une extrémité du tuyau-filtre, et
le tuyau d'introduction et d'évacuation de gaz de combustion étant fourni dans l'espace interne du tuyau-filtre de couche interne.

21. Appareil selon la revendication 20, dans lequel le tuyau d'introduction et d'évacuation de gaz de combustion comprend
une partie de tuyau perforé présentant de multiples petits trous pour laisser passer le gaz à travers la paroi du tuyau et un couvercle d'extrémité arrière présentant de multiples petits trous pour laisser passer le gaz à travers celui-ci, et
une partie de tuyau munie de nombreux orifices d'échappement de gaz sur la paroi du tuyau proche de la partie d'extrémité et
une plaque de blocage sur la partie d'extrémité du haut.

22. Appareil selon la revendication 20 ou 21, dans lequel le charbon actif utilisé est produit en brûlant des pneus usés.
